(19) Europäisches Patentamt
European Patent Office
Office européen des brevets

(11) Veröffentlichungsnummer: **0 477 676 B1**

(12) **EUROPÄISCHE PATENTSCHRIFT**

(45) Veröffentlichungstag der Patentschrift: **04.01.95**

(51) Int. Cl.$^{6}$: **A01N 53/00**

(21) Anmeldenummer: **91115430.0**

(22) Anmeldetag: **12.09.91**

# (54) Pyrethroid-Wirkstoffkombinationen enthaltend Benfluthrin und Prallethrin.

(30) Priorität: **25.09.90 DE 4030223**

(43) Veröffentlichungstag der Anmeldung:
**01.04.92 Patentblatt 92/14**

(45) Bekanntmachung des Hinweises auf die Patenterteilung:
**04.01.95 Patentblatt 95/01**

(84) Benannte Vertragsstaaten:
**BE DE ES FR GB GR IT NL**

(56) Entgegenhaltungen:
**EP-A- 0 148 625**
**EP-A- 0 279 325**

(73) Patentinhaber: **BAYER AG**
**D-51368 Leverkusen (DE)**

(72) Erfinder: **Mrusek, Klaus**
**Am Katterbach 66**
**W-5060 Bergisch Gladbach 2 (DE)**
Erfinder: **Naumann, Klaus, Dr.**
**Richard-Wagner-Strasse 9**
**W-5090 Leverkusen 1 (DE)**
Erfinder: **Sonneck, Rainer, Dr.**
**Roggendorfstrasse 63**
**W-5000 Köln 80 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung betrifft neue Wirkstoffkombinationen enthaltend die Pyrethroide Benfluthrin ((+)1R-trans-2,2-Dimethyl-3-(2,2-dichlorvinyl)-cyclo-propancarbonsäure-2,3,5,6-tetrafluorhenzylester) und Prallethrin (1R-2-Propargyl-3-methyl-cyclo-pent-2-en-1-on-4-yl-cis/trans-chrysanthemat).
Prallethrin ist auch unter dem Handelsnamen 'Etoc®' bekannt.

Synergistische Kombinationen verschiedener Pyrethroide sind im Prinzip bekannt. Eine wechselseitige Wirkungsbeeinflussung der insektiziden Wirkung der Komponenten tritt jedoch in unterschiedlichem und nicht vorhersehbarem Ausmaß auf. Es sind sogar antagonistische Wirkungen von Pyrethroid-Mischungen bekannt (siehe dazu K. Naumann, Synthetic Pyrethroid Insecticides: Structures and Properties, Springer Verlag Berlin, 1990, S. 164, 167 und 168).

Eine Vielzahl von Publikationen auf dem Gebiet des Pyrethroid/Pyrethroid-Synergismus zeigt, daß Verallgemeinerungen nicht möglich sind und daß eine optimale synergistische insektizide Wirksamkeitssteigerung nicht vorhergesagt werden kann. Das Zustandekommen der biologischen Wirkung, wie auch des Synergismus hat seine Ursache nicht nur auf molekular-pharmakologischer Ebene, auch pharmakodynamische und metabolische Vorgänge spielen eine Rolle.

Weiterhin ist zu beachten, daß verschiedene Arthropodenspezies sehr unterschiedlich auf solche synergistischen Mischungen reagieren. Die in manchen Fällen erreichbare absolute Reduzierung der Aufwandmenge der beteiligten Pyrethroide ist auch als innovativer Beitrag zur Bekämpfung von fliegenden Schädlingen in geschlossenen Räumen aber auch im Freien aufzufassen, bei der es insbesondere bei möglichst geringem Wirkstoffeinsatz auf eine schnelle Wirkung ankommt, um z.B. Mückenstiche zu vermeiden. Es besteht daher in der Praxis ein großer Bedarf nach stark synergistisch wirksamen Pyrethroid-Kombinationen.

Aus EP-A 148 625 ist ein Synergismus für Kombinationen verschiedener leicht flüchtiger Pyrethroide bekannt. So wird das Prallethrin (dortige "Compound 11") mit Permethrinsäurepentafluorbenzylestern und insbesondere mit dem Pyrethroid-Wirkstoff Fenfluthrin (dortige "Compound 15") im Verhältnis Fenfluthrin:Prallethrin 1:4 bis 7:3 gemischt.

Aus der Tabelle 2 von EP-A 148 625 geht hervor, daß ein Mischungsverhältnis Fenfluthrin:Prallethrin von 1:3 bei Anwendung in einer Moskitospirale (coil) gegen die Mücke Culex pipiens pallens 1,4mal schneller wirkt als die gewichtsgleiche Menge Prallethrin allein und 1,3mal schneller als die gewichtsgleiche Menge Fenfluthrin allein, bezogen auf die 50 %ige knock-down-Wirkung ($KT_{50}$). Die Tabelle 6 von EP-A 148 625 zeigt, daß ein Mischungsverhältnis Fenfluthrin:Prallethrin von 1:4 in einem Verdampferplättchen nach Anwendung mit einem elektrischen Verdampferöfchen 1,6mal schneller wirkt als die gewichtsgleiche Menge Fenfluthrin allein, und 1,4mal schneller als die gewichtsgleiche Menge Prallethrin wirkt.

Es wurde nun gefunden, daß Wirkstoffkombinationen, welche die Pyrethroide Benfluthrin ((+)1R-trans-2,2-Dimethy-3-(2,2-dichlorvinyl)-cyclopropancarbonsäure-2,3,5,6-tetrafluorbenzylester) der Formel (I)

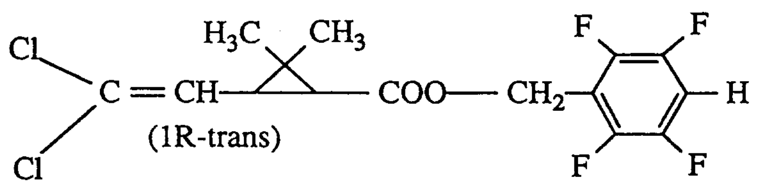

(I)

und Prallethrin (1R-2-Propargyl-3-methyl-cyclopent-2-en-1-on-4-yl-cis/transchrysanthemat) der Formel

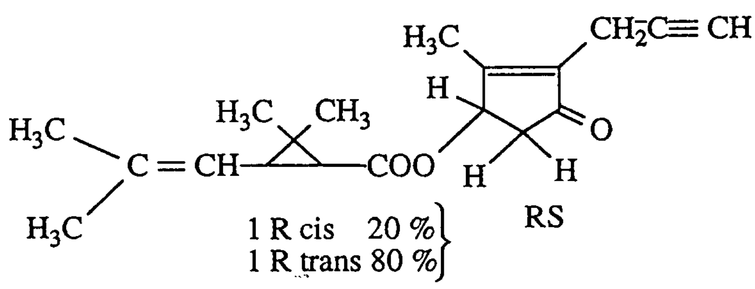

(II)

im Mischungsverhältnis von 1 Gewichtsteil Benfluthrin zu 1 Gewichtsteil Prallethrin bis 1 Gewichtsteil Benfluthrin zu 7 Gewichtsteilen Prallethrin enthalten,
einem überraschend stark ausgeprägten synergistischen Effekt gegenüber Mücken und Fliegen aufweisen.

Diese Mischungen führen zu viel schnelleren Wirkungen, als es die gewichtsgleichen Mengen an jeweils reiner Komponente bewirken. Dies wirkt sich hier auf die unterschiedlichen Arten von Mücken und Fliegen in optimaler Weise aus; sogar Fliegen mit einer breiten Resistenz gegen Phosphorester, Carbamate und Pyrethroide lassen sich mit den erfindungsgemäßen Mischungen wieder zufriedenstellend bekämpfen.

Der Wirkstoff Benfluthrin ist aus EP-A 279 325 und der Wirkstoff Prallethrin z.B. aus BE-A 805 442 und EP-A 148 625 bekannt.

Besonders bevorzugt werden die beiden Komponenten Benfluthrin und Prallethrin im Gewichtsverhältnis (Benfluthrin:Prallethrin) von 1:3 bis 1:6 gemischt und insbesondere im Gewichtsverhältnis von 1:4 bis 1:5.

Experimentelle Untersuchungen ergaben, daß bei einer Benfluthrin/Prallethrin-Wirkstoffkombination im Verhältnis 1:5 Aëdes und Culex Mücken 5mal schneller als mit der gewichtsgleichen Menge Benfluthrin allein und 10mal schneller als mit der gewichtsgleichen Menge Prallethrin allein niedergeschlagen ("knock-down-Effekt") werden. Bei Fliegen mit stärker ausgeprägter Resistenz wirkte die Kombination Benfluthrin:Prallethrin = 1:4 10mal schneller als die gewichtsgleiche Menge Benfluthrin und 20mal schneller als die gewichtsgleiche Menge Prallethrin. Siehe dazu Beispiel A mit den Tabellen 1 bis 6 des experimentellen Teils der vorliegenden Patentanmeldung.

Die erfindungsgemäßen Wirkstoffkombinationen eignen sich vor allem zur Bekämpfung von tierischen Schädlingen, insbesondere von Arthropoden, die im Haushalt oder als Hygiene-, Vorrats-Schädlinge vorkommen. Sie sind gegen normal-sensible und/oder resistente Arten sowie gegen alle oder einzelne Entwicklungsstadien wirksam. Zu den oben erwähnten Schädlingen gehören:
Aus der Ordnung der Thysanura z.B. Lepisma saccharina.
Aus der Ordnung der Orthoptera z.B. Blatta orientalis, Periplaneta americana, Leucophaea maderae, Blattella germanica, Acheta domesticus.
Aus der Ordnung der Demaptera z.B. Forficula auricularis.
Aus der Ordnung der Isoptera z.B. Reticulitermes spp.
Aus der Ordnung der Anoplura z.B. Pediculus humanus corporis.
Aus der Ordnung der Heteroptera z.B. Cimex lectularius, Rhodnius prolixus, Triatoma infestans.
Aus der Ordnung der Lepidoptera z.B. Ephestia kuehniella, Galleria mellonella, Tineola biselliella.
Aus der Ordnung der Coleoptera z.B. Anobium punctatum, Rhizopherta dominica, Hylotrupes bajulus, Oryzaephilus surinamensis, Sitophilus spp., Dermestes spp., Trogoderma spp., Anthrenus spp., Lyctus spp., Niptus hololeucus, Gibbium psylloides, Tribolium spp.
Aus der Ordnung der Hymenoptera z.B. Monomorium pharaonis, Lasius niger, Vespa spp.
Aus der Ordnung der Diptera z.B. Aëdes aegypti, Anopheles spp., Culex spp., Musca spp., Fannia spp., Calliphora spp., Lucilia spp., Chrysomyia spp., Stomoxys spp., Tabanus spp.
Aus der Ordnung der Siphonaptera z.B. Xenopsylla cheopis, Ceratophyllus spp., Ctenocephalides spp.
Aus der Ordnung der Acarina z.B. Glycyphagus spp., Tyrophagus spp., Ornithodoros spp., Argas spp., Ixodes spp.

Für die Herstellung gebrauchsfertiger Formulierungen wird die erfindungsgemäße Wirkstoffkombination in die üblichen Formulierungen überführt wie Lösungen, Emulsionen, Makro- und Mikroemulsionen, Spritzpulver, Suspensionen, Puder, Stäubemittel, Schäume, Pasten, Ködern, Aerosole, Ölsprühmittel, Suspensions-Konzentrate, Wirkstoff-imprägnierte Natur- und synthetische Stoffe, insbesondere sogenannte slow release-Formulierungen, die den Wirkstoff langsam in dosierter Menge abgeben, Feinstverkapselungen, Brennsätze, Räucherpatronen, Räucherdosen, Kerzen, Mückenspiralen, ULV-, Kalt- und Heißnebelformulierungen, Mottenpapiere sowie Verdampferplättchen und Lösungen für die Anwendung auf bzw. in elektrisch oder chemothermisch erhitzten Vorrichtungen, weiterhin die Anwendung in hitzeunabhängigen Verdampfersystemen.

Die Formulierungen werden in bekannter Weise hergestellt, z.B. durch Vermischen der beiden Wirkstoffe mit Streckmitteln, also flüchtigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen infrage: Aromaten, wie Xylol, Toluol, oder Alkylnaphthaline, chlorierte Aromaten und chlorierte aliphatische Kohlenwasserstoffe, wie Chlorbenzole, Chlorethylen oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon und Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosoltreibgase sowie Halogenkohlenwasserstoffe wie Butan, Propan, Stickstoff und Kohlendioxid. Als feste Trägerstoffe seien aufgeführt: natürliche Gesteinsmehle, wie Kaoline, Tonerden, Talkum, Kreide, Quarz, Attapulgit, Montmorrillonit oder Diatomeenerde und synthetische Gesteinsmehle, wie hochdisperse Kieselsäure, Aluminiumoxid und Silikate; als feste Trägerstoffe für Granulate: gebrochene und fraktionierte Steine wie Calcit, Marmor, Bims, Sepiolith, Dolomit sowie synthetische Granulate aus anorganischen und organischen Mehlen sowie Granulate aus organischem Material wie Sägemehl, Kokosnußschalen` Malskolben, und Tabakstengel; als Emulgier- und/oder schaumerzeugende Mittel; nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel: z.B. Lignin-Sulfitablaugen und Methylcellulose.

Es können in den Formulierungen auch Haftmittel wie Carboxymethylcellulose, natürliche und synthetische, pulvrige, körnige und latexförmige Polymere verwendet werden, wie Gummi arabicum, Polyvinylalkohol, Polyvinylacetat.

Handelsübliche Fertigformulierungen oder die zur Weiterverdünnung vorgesehenen Konzentrate enthalten im allgemeinen 0,005 bis 96 Gew.-% der erfindungsgemäßen Wirkstoffkombination, vorzugsweise zwischen 0,02 und 90 % der erfindungsgemäßen Wirkstoffkombination.

Der Wirkstoffgehalt der aus den handelsüblichen Formulierungen bereiteten Anwendungsformen kann in weiten Bereichen variieren. Die Wirkstoffkonzentration der Anwendungsformen kann von 0,001 bis 100 Gew.-% Wirkstoff, vorzugsweise zwischen 0,01 und 20 Gew.-%, liegen.

Die Anwendung geschieht in einer den Anwendungsformen angepaßten üblichen Weise. Besonders bevorzugt sind Sprayformulierungen, Mückenspiralen, Verdampferplättchen und Lösungen für Langzeitverdampfuhgssysteme.

Beispielhaft seien die folgenden Formulierungsbeispiele aufgeführt.

Formulierungsbeispiele

1.

| Sprayformulierung | Gewichtsteile in % |
|---|---|
| Wirkstoff Benfluthrin | 0,008 |
| Wirkstoff Prallethrin | 0,032 |
| Desodoriertes Keroson/Gemisch gesättigter, aliphatischer Kohlenwasserstoffe | 5,0 |
| Parfümöl | 0,01 |
| Stabilisator | 0,1 |
| Treibmittel: Propan/Butan 15:85 | 94,85 |

2.

| Sprayformulierung | Gewichtsteile in % |
|---|---|
| Wirkstoff Benfluthrin | 0,205 |
| Wirkstoff Prallethrin | 0,820 |
| Desodoriertes Kerosen/Gemisch gesättigter, aliphatischer Kohlenwasserstoffe | 38,36 |
| Parfümöl | 0,03 |
| Stabilisator | 0,1 |
| Methylenchlorid | 15,0 |
| Treibmittel: Propan/Butan 15:85 | 45,485 |

3.

| Verdampferplättchen | |
|---|---|
| Wirkstoff Benfluthrin | 5 mg |
| Wirkstoff Prallethrin | 25 mg |
| Diisononylphthalat | 150 mg |
| Parfüm | 0,25 mg |
| Celluloseplättchen (16 x 28 x 3 mm) | 800 mg |

Beispiel 1

Versuchsbeschreibung

Aerosoltest in 1 $m^3$-Kammern

In Prüfkammern aus Glas mit Edelstahlboden der Größe (Innenmaße) 0,84x0,87x1,37 m ≙ 1 $m^3$ Fassungsvermögen wurden im oberen Drittel des Innenraumes 3 Drahtkörbchen (Länge 7,8 cm, Durchmesser 8 cm, Maschenweite 1 mm) mit je 20 Testtieren aufgehängt. Eine bestimmte Menge Wirkstoff wurde in 2 ml Aceton gelöst und mit Hilfe einer auf dem Boden der Kammer stehenden Glasdüse mittels Druckluft versprüht.

Ermittelt wurde die Zeit, nach der 10, 50 und 95 % der Tiere niedergeschlagen ("knock-down" $K^T$) waren. Trat die KT 95 innerhalb von 60 Minuten Expositionszeit nicht ein, wurde der Prozentsatz der "knock-down"-gegangenen Tiere bestimmt. Die Versuchstiere wurden nach einer Stunde aus den Kammern entfernt, in saubere, mit Drahtgaze verschlossene Pappbecher überführt, mit 15 %igen Zucker-Wasserlösung getränkten Zellstofftupfern versehen und in einen insektizidfreien Raum gebracht. 24 Stunden danach wurde die prozentuale Abtötung bestimmt.

Die folgenden Tabellen 1 bis 6 zeigen den synergistischen Effekt der Wirkstoffkombination aus Benfluthrin und Prallethrin.

Tabelle 1

Aerosolwirkung von Benfluthrin (I) und Prallethrin (II) sowie Kombination von beiden Wirkstoffen in 1 $m^3$-Kammern gegen Stechmücken der Art Aëdes aegypti (sensibel)

(Ergebnisse Mittel aus 3 Versuchen) Temperatur: 20-23°C; rel. Luftfeuchte: 60-86 %

10%, 50% und 95% Knock-Down-Wirkung nach Minuten (') bzw. % Knock-Down-Wirkung nach 1 h sowie % Abtötung nach 24 h

| Aufwandmenge mg Wirkstoff bzw. Wirkstoffgemisch pro $m^3$ | (I) | | | | (II) | | | | (I) + (II) 1 : 1 | | | | (I) + (II) 1 : 2 | | | |
|---|---|---|---|---|---|---|---|---|---|---|---|---|---|---|---|---|
| | 10 | 50 | 95 | 24h | 10 | 50 | 95 | 24h | 10 | 50 | 95 | 24h | 10 | 50 | 95 | 24h |
| 0,025 | | | | | 1' | 2' | 3' | 100 | | | | | | | | |
| 0,01 | 2' | 3' | 6' | 100 | 1' | 2' | 3' | 78 | 1' | 2' | 4' | 100 | 1' | 2' | 3' | 100 |
| 0,005 | 2' | 5' | 10' | 98 | 2' | 2' | 7' | 62 | 2' | 2' | 5' | 100 | 1' | 2' | 3' | 100 |
| 0,0025 | 4' | 7' | 25' | 87 | 6' | >60 | 13% | 18 | 2' | 3' | 11' | 90 | 1' | 2' | 4' | 95 |
| 0,001 | 30' | > 60' | 32% | 35 | 36' | >60 | 10% | 5 | 8' | >60' | 41% | 37 | 3' | 29' | 53% | 57 |
| 0,0005 | > 60' | > 60' | 1% | 3 | > 60' | >60 | 3% | 2 | 39' | >60' | 16% | 22 | > 60' | >60' | 9% | 30 |
| 0,00025 | > 60' | > 60' | 0% | 0 | | | | | > 60' | >60' | 0% | 17 | > 60' | >60' | 1% | 23 |

| Aufwandmenge mg Wirkstoff bzw. Wirkstoffgemisch pro $m^3$ | (I) + (II) 1 : 3 | | | | (I) + (II) 1 : 4 | | | | (I) + (II) 1 : 5 | | | |
|---|---|---|---|---|---|---|---|---|---|---|---|---|
| | 10 | 50 | 95 | 24h | 10 | 50 | 95 | 24h | 10 | 50 | 95 | 24h |
| 0,025 | | | | | | | | | | | | |
| 0,01 | 1' | 2' | 2,5' | 100 | 1' | 2' | 3' | 100 | 1' | 1' | 2' | 100 |
| 0,005 | 1' | 2' | 3' | 97 | 1' | 2' | 3' | 92 | 1' | 1' | 3' | 97 |
| 0,0025 | 1,5' | 2' | 4' | 87 | 1' | 2' | 5' | 84 | 1' | 1,5' | 3' | 87 |
| 0,001 | 3' | 23' | 64% | 52 | 3' | 10' | 74% | 40 | 2' | 4' | 7' | 73 |
| 0,0005 | 8' | >60' | 21% | 5 | 5' | >60' | 28% | 3 | 3' | 6' | 13' | 42 |
| 0,00025 | > 60' | >60' | 6% | 5 | > 60' | >60' | 8% | 0 | 6' | 25' | 57% | 11 |

Tabelle 2

Aerosolwirkung von Benfluthrin (I) und Prallethrin (II) sowie Kombination von beiden Wirkstoffen in 1 $m^3$-Kammern gegen sensible Stechmücken der Art Culex pipiens fatigans (DDT-resistent)

(Ergebnisse Mittel aus 3 Versuchen) Temperatur: 20-24°C; rel. Luftfeuchte: 60-85 %

| Aufwandmenge mg Wirkstoff bzw. Wirkstoffgemisch pro $m^3$ | 10%, 50% und 95% Knock-Down-Wirkung nach Minuten (') bzw. % Knock-Down-Wirkung nach 1 h sowie % Abtötungen nach 24 h | | | | | | | | | | | | | | | | | | | | | | | | | | | |
|---|---|---|---|---|---|---|---|---|---|---|---|---|---|---|---|---|---|---|---|---|---|---|---|---|---|---|---|---|
| | (I) | | | | (II) | | | | (I) + (II) 1 : 1 | | | | (I) + (II) 1 : 2 | | | | (I) + (II) 1 : 3 | | | | (I) + (II) 1 : 4 | | | | (I) + (II) 1 : 5 | | | |
| | 10 | 50 | 95 | 24h | 10 | 50 | 95 | 24h | 10 | 50 | 95 | 24h | 10 | 50 | 95 | 24h | 10 | 50 | 95 | 24h | 10 | 50 | 95 | 24h | 10 | 50 | 95 | 24h |
| 0,5 | 2' | 4' | 6' | 98 | 3' | 7' | 15' | 93 | 2' | 3' | 7' | 100 | 1,5' | 3' | 6' | 100 | 1' | 2' | 5' | 100 | 1' | 2' | 3' | 100 | 1' | 2' | 4' | 100 |
| 0,25 | 32' | 5' | 7' | 97 | 5' | 11' | 62% | 44 | 2' | 5' | 10' | 97 | 2' | 4' | 7' | 100 | 1,5' | 3' | 6' | 100 | 1' | 2' | 4' | 100 | 1' | 2' | 4' | 100 |
| 0,1 | 7' | 16' | 83% | 58 | 13' | >60 | 12% | 8 | 4' | 8' | 35' | 86 | 3' | 7' | 12' | 94 | 2' | 4' | 9' | 92 | 2' | 3' | 5' | 96 | 3' | 5' | 8' | 99 |
| 0,05 | 13' | > 60' | 33% | 32 | > 60' | >60 | 2% | 3 | 6' | 29' | 79% | 67 | 5' | 8' | 38% | 90 | 4' | 7' | 43' | 85 | 3' | 6' | 20' | 79 | 4' | 6' | 11' | 89 |
| 0,025 | > 60' | > 60' | 3% | 3 | > 60' | >60 | 1% | 3 | > 60' | >60' | 7 % | 8 | 35' | >60' | 14% | 20 | 7' | >60' | 16% | 16 | 4' | 17' | 73% | 45 | 6' | 21' | 83% | 66 |

Tabelle 3

Aerosolwirkung von Benfluthrin (I) und Prallethrin (II) sowie Kombination von beiden Wirkstoffen in 1 $m^3$-Kammern gegen normal sensible Stubenfliegen der Art Musca domestica ♂♂ Stamm WHO(N) F 365 (sensible)

(Ergebnisse Mittel aus 3 Versuchen)

Temperatur: 21°C
rel. Luftfeuchte: 60-80 %

| Aufwandmenge mg Wirkstoff bzw. Wirkstoffgemisch pro $m^3$ | 10%, 50% und 95% Knock-Down-Wirkung nach Minuten (') bzw. % Knock-Down-Wirkung nach 1 h sowie % Abtötungen nach 24 h | | | | | | | | | | | | | | | | | | | | | | | | | | | |
|---|---|---|---|---|---|---|---|---|---|---|---|---|---|---|---|---|---|---|---|---|---|---|---|---|---|---|---|---|
| | (I) | | | | (II) | | | | (I) + (II) 1 : 1 | | | | (I) + (II) 1 : 2 | | | | (I) + (II) 1 : 3 | | | | (I) + (II) 1 : 4 | | | | (I) + (II) 1 : 5 | | | |
| | 10 | 50 | 95 | 24h | 10 | 50 | 95 | 24h | 10 | 50 | 95 | 24h | 10 | 50 | 95 | 24h | 10 | 50 | 95 | 24h | 10 | 50 | 95 | 24h | 10 | 50 | 95 | 24h |
| 10,0 | 1,5' | 2' | 3' | 100 | 1,5' | 2' | 4' | 70 | | | | | | | | | | | | | | | | | | | | |
| 5,0 | 2' | 3' | 4' | 100 | 3' | 4' | 6' | 34 | | | | | | | | | | | | | | | | | | | | |
| 2,5 | 2,5' | 4' | 5' | 100 | 4' | 6' | 10' | 9 | | | | | | | | | | | | | | | | | | | | |
| 1,0 | 3' | 5' | 7' | 100 | 7' | 10' | 93% | 1 | 3' | 5' | 7' | 99 | 3' | 4' | 6' | 100 | 3' | 4' | 5' | 100 | 2' | 3' | 4' | 100 | 2,5' | 3' | 5' | 100 |
| 0,5 | 4' | 7' | 11' | 98 | 24' | >60' | 29% | 0 | 5' | 6' | 15' | 92 | 4' | 6' | 14' | 93 | 3' | 6' | 8' | 98 | 3' | 5' | 7' | 97 | 3' | 4' | 7' | 96 |
| 0,25 | 6' | 13' | 18' | 89 | > 60' | >60' | 0% | 0 | 6' | 8' | 17' | 68 | 5' | 9' | 20' | 62 | 6' | 8' | 12' | 86 | 6' | 7' | 13' | 92 | 4' | 7' | 11' | 51 |

Tabelle 4

Aerosolwirkung von Benfluthrin (I) und Prallethrin (II) sowie Kombination von beiden Wirkstoffen in 1 $m^3$-Kammern gegen resistente Stubenfliegen der Art Musca domestica ♂♂ Stamm Weymanns F 294 (P-ester und Carbamate resistent)

(Ergebnisse Mittel aus 3 Versuchen)

Temperatur: 21°C
rel. Luftfeuchte: 60-80 %

| Aufwandmenge mg Wirkstoff bzw. Wirkstoffgemisch pro $m^3$ | 10%, 50% und 95% Knock-Down-Wirkung nach Minuten (') bzw. % Knock-Down-Wirkung nach 1 h sowie % Abtötungen nach 24 h | | | | | | | | | | | | | | | | | | | | | | | | | | | |
|---|---|---|---|---|---|---|---|---|---|---|---|---|---|---|---|---|---|---|---|---|---|---|---|---|---|---|---|---|
| | (I) | | | | (II) | | | | (I) + (II) 1 : 1 | | | | (I) + (II) 1 : 2 | | | | (I) + (II) 1 : 3 | | | | (I) + (II) 1 : 4 | | | | (I) + (II) 1 : 5 | | | |
| | 10 | 50 | 95 | 24h | 10 | 50 | 95 | 24h | 10 | 50 | 95 | 24h | 10 | 50 | 95 | 24h | 10 | 50 | 95 | 24h | 10 | 50 | 95 | 24h | 10 | 50 | 95 | 24h |
| 10,0 | 4' | 6' | 9' | 100 | 7' | 11' | 22' | 66 | | | | | | | | | | | | | | | | | | | | |
| 5,0 | 6' | 8' | 12' | 97 | 10' | 18' | 92% | 46 | | | | | | | | | | | | | 5' | 7' | 10' | 100 | | | | |
| 2,5 | 7' | 10' | 16' | 93 | 21' | 40' | 75% | 2 | | | | | | | | | | | | | 6' | 8' | 12' | 91 | | | | |
| 1,0 | 11' | 18' | 25' | 88 | 28' | >60' | 59% | 0 | 9' | 18' | 27' | 84 | 11' | 19' | 27' | 95 | 6' | 9' | 15' | 89 | 8' | 10' | 14' | 89 | 7' | 10' | 17' | 88 |
| 0,5 | 17' | 22' | 38' | 44 | > 60' | >60' | 0% | 0 | 20' | 29' | 42' | 38 | 16' | 25' | 39' | 83 | 9' | 18' | 27' | 64 | 9' | 14' | 21' | 64 | 10' | 16' | 27' | 33 |

Tabelle 5

Aerosolwirkung von Benfluthrin (I) und Prallethrin (II) sowie Kombination von beiden Wirkstoffen in 1 $m^3$-Kammern gegen resistente Fliegen der Art Musca domestica ♂♂ Stamm Kretschmer F 14 (multiresistent gegen P-ester und Pyrethroide)

(Ergebnisse Mittel aus 3 Versuchen) Temperatur: 21°C; rel. Luftfeuchte: 60-80 %

| Aufwandmenge mg Wirkstoff bzw. Wirkstoffgemisch pro $m^3$ | 10%, 50% und 95% Knock-Down-Wirkung nach Minuten (') bzw. % Knock-Down-Wirkung nach 1 h sowie % Abtötungen nach 24 h | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|---|
| | (I) | | | | (II) | | | | (I) + (II) 1 : 1 | | | | (I) + (II) 1 : 2 | | | | (I) + (II) 1 : 3 | | | | (I) + (II) 1 : 4 | | | | (I) + (II) 1 : 5 | | | | (I) + (II) 1 : 6 | | | |
| | 10 | 50 | 95 | 24h | 10 | 50 | 95 | 24h | 10 | 50 | 95 | 24h | 10 | 50 | 95 | 24h | 10 | 50 | 95 | 24h | 10 | 50 | 95 | 24h | 10 | 50 | 95 | 24h | 10 | 50 | 95 | 24h |
| 10,0 | 11' | 31' | 64% | 0 | 14' | >60' | 28% | 0 | 10' | 17' | 73% | 13 | 4' | 12' | 88% | 17 | 3' | 8' | 20' | 42 | 3' | 6' | 18' | 45 | 2' | 3' | 10' | 91 | 4' | 5' | 10' | 85 |
| 7,5 | 13' | 33' | 47% | 0 | >60' | >60' | 0% | 0 | 12' | 36' | 58% | 4 | 5' | 15' | 87% | 8 | 4' | 12' | 38' | 29 | 3' | 9' | 31' | 39 | 3' | 4' | 16' | 86 | 4' | 7' | 28' | 54 |

Tabelle 6

Aerosolwirkung von Benfluthrin (I) und Prallethrin (II) sowie Kombination von beiden Wirkstoffen in 1 $m^3$-Kammern gegen resistente Fliegen der Art Musca domestica ♂♂ Stamm Hans F 126 ( Pyrethroid-resistent)

(Ergebnisse Mittel aus 3 Versuchen) Temperatur: 21°C; rel. Luftfeuchte: 60-80 %

| Aufwandmenge mg Wirkstoff bzw. Wirkstoffgemisch pro $m^3$ | 10%, 50% und 95% Knock-Down-Wirkung nach Minuten (') bzw. % Knock-Down-Wirkung nach 1 h sowie % Abtötungen nach 24 h | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|---|
| | (I) | | | | (II) | | | | (I) + (II) 1 : 1 | | | | (I) + (II) 1 : 2 | | | | (I) + (II) 1 : 3 | | | | (I) + (II) 1 : 4 | | | | (I) + (II) 1 : 5 | | | | (I) + (II) 1 : 6 | | | |
| | 10 | 50 | 95 | 24h | 10 | 50 | 95 | 24h | 10 | 50 | 95 | 24h | 10 | 50 | 95 | 24h | 10 | 50 | 95 | 24h | 10 | 50 | 95 | 24h | 10 | 50 | 95 | 24h | 10 | 50 | 95 | 24h |
| 10,0 | 20' | >60' | 32% | 0 | >60' | >60' | 0% | 0 | 18' | 35' | 54% | 0 | 10' | 25' | 59% | 0 | 8' | 19' | 85% | 4 | 8' | 12' | 33' | 36 | 7' | 14' | 26' | 26 | 5' | 8' | 18' | 85 |
| 7,5 | 24' | >60' | 21% | 0 | | | | | 25' | >60' | 21% | 0 | 17' | >60' | 36% | 0 | 12' | 44' | 53% | 0 | 10' | 22' | 56% | 0 | 8' | 17' | 78% | 11 | 6' | 22' | 71% | 15 |
| 5,0 | 32' | >60' | 16% | 0 | | | | | 27' | >60' | 13% | 0 | 21' | >60' | 14% | 0 | 18' | >60' | 19% | 0 | 13' | >60' | 43% | 0 | 11' | 31' | 54% | 0 | 8' | 34' | 51% | 8 |

## Patentansprüche

1. Pyrethroid-Wirkstoffkombinationen, welche neben üblichen Hilfs- und Zuschlagstoffen Benfluthrin ((+)-1R-trans-2,2-Dimethyl-3-(2,2-dichlorvinyl)-cyclopropancarbonsäure-2,3, 5,6-tetrafluorbenzylester und

Prallethrin (1R-2-Propargyl-3-methylcyclopent-2-en-1-on-4-yl-cis/trans-chrysanthemat) im Mischungsverhältnis von 1 Gewichtsteil Benfluthrin zu 1 Gewichtsteil Prallethrin bis 1 Gewichtsteil Benfluthrin zu 7 Gewichtsteilen Prallethrin enthalten.

**2.** Pyrethroid-Wirkstoffkombinationen gemäß Anspruch 1, welche Benfluthrin:Prallethrin im Gewichtsverhältnis 1:3 bis 1:6 enthalten.

**3.** Pyrethroid-Wirkstoffkombinationen gemäß Anspruch 1 und 2, welche Benfluthrin:Prallethrin im Gewichtsverhältnis 1:4 bis 1:5 enthalten.

**4.** Pyrethroid-Wirkstoffkombinationen gemäß Anspruch 1 bis 3, dadurch gekennzeichnet, daß es sich um Sprayformulierungen handelt.

**5.** Eyrethroid-Wirkstoffkombinationen gemäß Anspruch 1 bis 3, dadurch gekennzeichnet, daß es sich um Mückenspiralen handelt.

**6.** Pyrethroid-Wirkstoffkombinationen gemäß Anspruch 1 bis 3, dadurch gekennzeichnet, daß es sich um Verdampferplättchen oder Langzeitverdampfer handelt.

**7.** Verwendung von Fyrethroid-Wirkstoffkombinationen gemäß Anspruch 1 bis 3, dadurch gekennzeichnet, daß es sich um Mottenpapiere oder hitzeunabhängige Verdampfersysteme handelt.

**8.** Verwendung von Pyrethroid-Wirkstoffkombinationen gemäß Anspruch 1 bis 7 zur Bekämpfüng von Arthropoden, die im Haushalt oder als Hygiene- oder Vorratsschädlinge vorkommen.

**9.** Verfahren zur Bekämpfung von Arthropoden, die im Haushalt oder als Hygiene- oder Vortatsschädlinge vorkommen, dadurch gekennzeichnet, daß man Pyrethroid-Wirkstoffkombinationen gemäß Anspruch 1 bis 7 auf derartige Arhropoden und/oder ihren Lebensraum einwirken läßt.

## Claims

**1.** Combinations of active compounds of the pyrethroid type, containing, besides customary auxiliaries and additives, benfluthrin (2,3,5,6-tetrafluorobenzyl (+)1R-trans-2,2-dimethyl-3-(2,2-dichlorovinyl)-cyclopropanecarboxylate) and prallethrin (1R-2-propargyl-3-methyl-cyclopent-2-en-1-on-4-yl cis/trans-chrysanthemate), mixed in a ratio of 1 part by weight of benfluthrin to 1 part by weight of prallethrin to 1 part by weight of benfluthrin to 7 parts by weight of prallethrin.

**2.** Combinations of active compounds of the pyrethroid type according to Claim 1, containing benfluthrin: prallethrin in a ratio by weight of 1:3 to 1:6.

**3.** Combinations of active compounds of the pyrethroid type according to Claims 1 and 2, containing benfluthrin:prallethrin in a ratio by weight of 1:4 to 1:5.

**4.** Combinations of active compounds of the pyrethroid type according to Claims 1 to 3, characterized in that they are spray formulations.

**5.** Combinations of active compounds of the pyrethroid type according to Claims 1 to 3, characterized in that they are mosquito coils.

**6.** Combinations of active compounds of the pyrethroid type according to Claims 1 to 3, characterized in that they are smoke tablets or long-term vapour-releasing systems.

**7.** Use of combinations of active compounds of the pyrethroid type according to Claims 1 to 3, characterized in that they are moth papers or heat-independent vapour-releasing systems.

**8.** Use of combinations of active compounds of the pyrethroid type according to Claims 1 to 7 for combating arthropods which are encountered in human dwellings or as hygiene pests or pests of stored products.

9. Method of combating arthropods which are encountered in human dwellings or as hygiene pests or pests of stored products, characterized in that combinations of active compounds of the pyrethroid type according to Claims 1 to 7 are allowed to act on such arthropods and/or their environment.

## Revendications

1. Combinaisons de substances actives pyréthroïdes, qui contiennent, outre les adjuvants et les additifs habituels, de la benfluthrine (ester 2,3,5,6-tétrafluorobenzylique de l'acide (+)1R-trans-2,2-diméthyl-3-(2,2-dichlorovinyl)-cyclopropanecarboxylique) et de la pralléthrine (cis/trans chrysanthémate de 1R-2-propargyl-3-méthyl-cyclopent-2-én-1-on-4-yle) dans un rapport de mélange de 1 partie en poids de benfluthrine à 1 partie en poids de pralléthrine jusqu'à 1 partie en poids de benfluthrine à 7 parties en poids de prallétrine.

2. Combinaisons de substances actives pyréthroïdes selon la revendication 1, qui contiennent de la benfluthrine:pralléthrine dans un rapport pondéral de 1:3 à 1:6.

3. Combinaisons de substances actives pyréthroïdes selon les revendications 1 et 2, qui contiennent de la benfluthrine:pralléthrine dans un rapport pondéral de 1:4 à 1:5.

4. Combinaisons de substances actives pyréthroïdes selon les revendications 1 à 3, caractérisées en ce qu'il s'agit de formulations en spray.

5. Combinaisons de substances actives pyréthroïdes selon les revendications 1 à 3, caractérisées en ce qu'il s'agit de spirales pour moustiques.

6. Combinaisons de substances actives pyréthroïdes selon les revendications 1 à 3, caractérisées en ce qu'il s'agit de plaquettes d'évaporation ou d'évaporateurs longue durée.

7. Utilisation de combinaisons de substances actives pyréthroïdes selon les revendications 1 à 3, caractérisée en ce qu'il s'agit de papiers pour mites ou de systèmes d'évaporateurs indépendants de la chaleur.

8. Utilisation de combinaisons de substances actives pyréthroïdes selon les revendications 1 à 7 pour lutter contre les arthropodes présents dans l'environnement domestique ou sous forme de parasites dans le domaine de l'hygiène ou de l'alimentation.

9. Procédé pour lutter contre les arthropodes qui sont présents dans l'environnement domestique ou sous forme de parasites dans le domaine de l'hygiène ou de l'alimentation, caractérisé en ce qu'on laisse agir des combinaisons de substances actives pyréthroïdes selon les revendications 1 à 7 sur des arthropodes de ce type et/ou sur leur biotope.